# EUROPÄISCHE PATENTANMELDUNG

(11) **EP 1 102 138 A1**
(43) Veröffentlichungstag der Anmeldung: **23.05.2001**
(21) Anmeldenummer: 00125445.7
(22) Anmeldetag: 20.11.2000
(51) Int. Cl.: G05B 19/4099

(54) **Verfahren zum Herstellen von 3-dimensionalen Formteilen**

(30) Priorität: 22.11.1999 DE 19956050
(71) Anmelder: Schindele, Paul, 87439 Kempten (DE)
(72) Erfinder: Schindele, Paul, 87439 Kempten (DE)
(74) Vertreter: Weber, Joachim, Dr.

(57) **Zusammenfassung**

Bei einem Verfahren zur Herstellung eines dreidimensionalen Formteils, dessen Form als elektronischer Datensatz vorgegeben ist, wird das Formteil elektronisch in einzelne standardisierter Teilelemente unterteilt, deren zusammengefügte Zuordnung der Form des dreidimensionalen Formteils angenähert ist. Des weiteren wird die Form der zusammengefügten Zuordnung elektronisch mit der Form des Formteils verglichen, und dass eventuelle Fehlbereiche oder Überstandbereiche in Form von Datensätzen ermittelt und gespeichert werden.

## Beschreibung

Die Erfindung bezieht sich auf ein Verfahren zum Herstellen von 3-dimensionalen Formteilen.

Es ist z.B. aus der US 42 47 508 ein derartiges Verfahren bekannt. Dabei wir das dreidimensionale Objekt in Schichten gebildet, die selektiv mittels eines Laserstrahles aufgeschmolzen werden. Als Material für dieses Formverfahren wird unter anderem Sand oder thermoplastischer Kunststoff verwendet. Bei dem Verfahren handelt es sich um einen typischen Sinterprozess, bei dem es unter Temperatureinwirkung zum Aufschmelzen und Zusammenbacken der Partikel des verwendeten Materials kommt. Oie dazu erforderliche Laserleistung ist dem Schmelzpunkt des Sandes entsprechend sehr hoch. Hinzu kommt, daß der Aufbau gerade großer Formkörper relativ lange dauert und es während der Dauer der Herstellung erforderlich ist, die Systemparameter, insbesondere die Raumtemperatur stabil zu halten.

Der Erfindung liegt die Aufgabe zugrunde, ein Verfahren der eingangs genannten Art zu schaffen, durch das in relativ kurzer Zeit und mit geringem apparativen und Energie-Aufwand auch große Formkörper hergestellt werden.

Die Erfindung löst diese Aufgabe mit den Merkmalen des Patentanspruchs 1

Wesentlich für die Erfindung ist zum einen die Verwendung von standardisierten Elementen, durch die bei entsprechender Auswahl und Zuordnung das dreidimensionale Formteil im zusammengefügten Zustand in der Form angenähert ist. Durch einen elektronischen Vergleich werden die Formen der zusammengefügten Zuordnung und des Formteils, verglichen. Evtl. Fehl- und/oder Überstandsbereiche werden in Form von Datensätzen ermittelt und gespeichert.

Vorteilhafte Ausgestaltungen der Erfindung sind Gegenstand der weiteren Patentansprüche und werden anhand der in der Zeichnung dargestellten Ausführungsbeispielen näher erläutert.

Die standardisierten Teilelemente sind in der Regel gegenüber dem herzustellenden Formteil wesentlich kleiner und in ihrer Form zwar aufeinander abgestimmt, jedoch in ihrer individuellen Form auf das Formteil in der Regel nicht abgestimmt. Die daraus gebildete zusammenfügte Zuordnung (i.f. auch Grundkörper genannt), wird durch den sich anschließenden Formerzeugungsprozeß in die endgültige Form gebracht.

Der Formerzeugungsprozeß besitzt verschiedene Varianten, die in den Patentansprüchen angegeben sind. Die Varianten unterscheiden sich, indem bei der einen der Grundkörper zumindest partiell abgetragen, bei der anderen partiell ergänzt wird.

Das Abtragen kann in an sich bekannter Weise mittels einer mechanischen Bearbeitung, z.B. Fräsen oder mittels eines Laserstrahls erfolgen.

Auch das Ergänzen ist in verschiedenen Varianten möglich. Ein Verfahren hierfür ist unter der Bezeichnung Rapid-Prototyping in verschiedener Ausführung bekannt. Zu nennen sind dabei beispielsweise das aus der genannten US-PS bekannte Sintern oder auch die Stereolithografie mittels eines Laserstrahls.

In jedem Fall ist der gesamte Herstellungsaufwand im wesentlichen auf den Aufwand beschränkt, der für die nachträgliche Modellierung erforderlich ist. Die Erstellung des Grundkörpers kann demgegenüber ohne besonderen Zeitaufwand erfolgen.

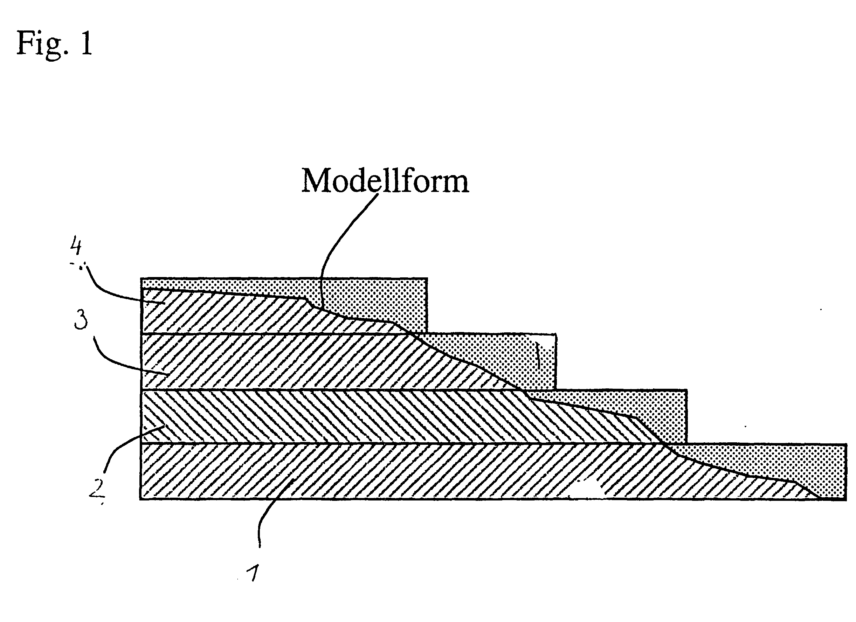

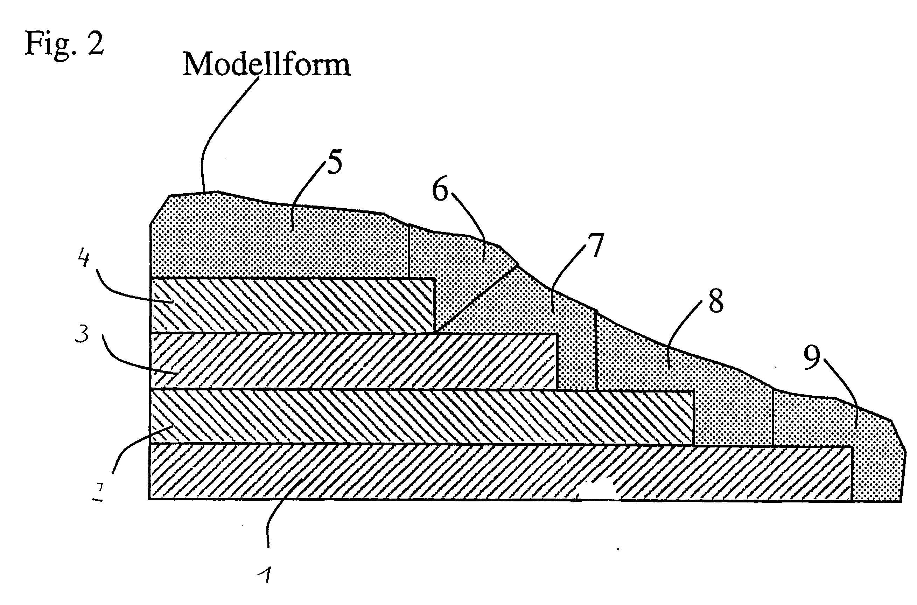

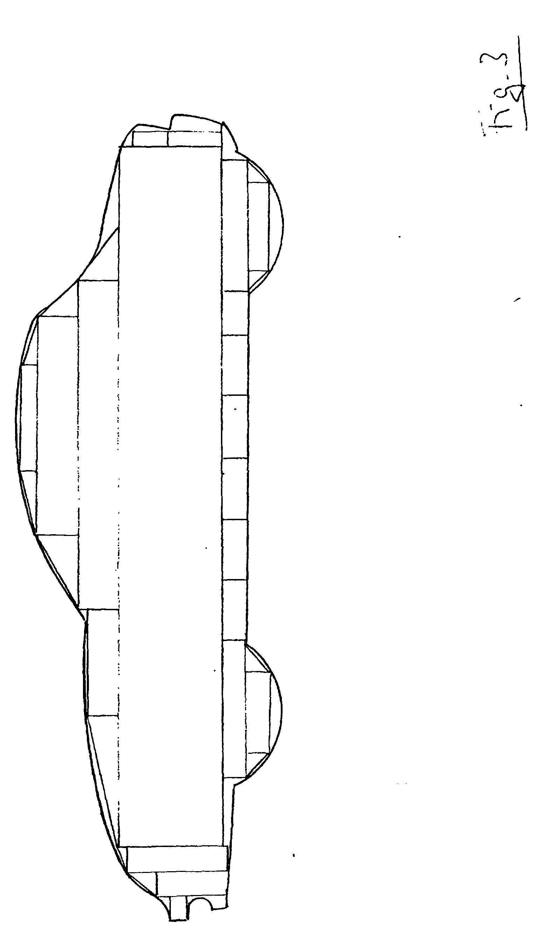

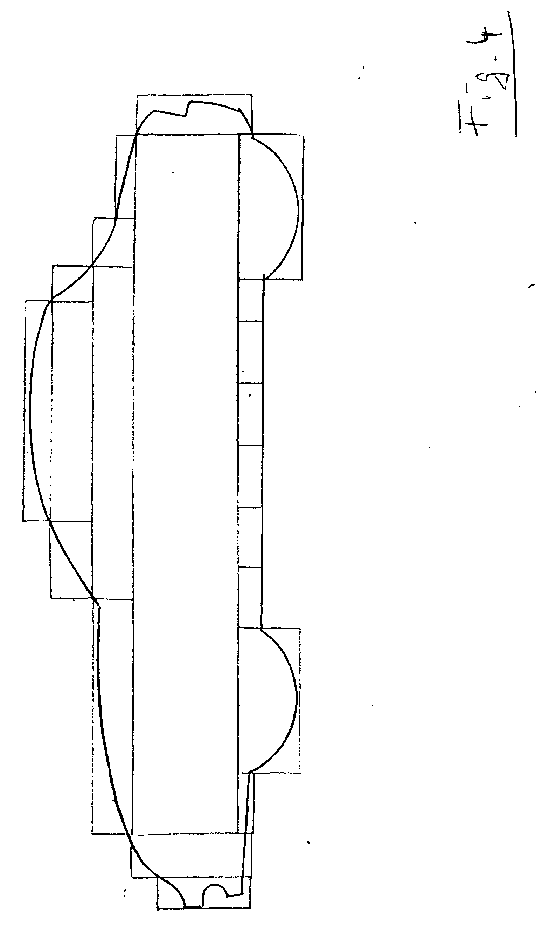

Die Erfindung ist anhand zweier, in Fig. 1 und Fig.2 dargestellter Ausführungsbeispiele weiter erläutert.

In Fig. 1 wird ein Formkörper, der eine mit Modellform bezeichnete Kontur besitzt, ausgehend von einem Grundkörper hergestellt. Der Grundkörper besitzt größere Abmessungen als der Formkörper. Er wird aus z.B. quaderförmigen Standardbausteinen 1,2,3 und 4 gebildet, die aus an sich bekanntem Material, z.. B. PU-Schaum bestehen und vorbereitend zusammengesetzt und miteinander an ihren Berührflächen gefügt, vorzugsweise verklebt werden. Anschließend daran wird eine Nacharbeit vorgenommen, indem der Grundkörper an den überstehenden Stellen z.B. spanend mittels eines Fräsers oder durch einen Laserstrahl (nicht dargestellt) abgetragen wird. Der Laserstrahl wird entsprechend den in einem Datenspeicher enthaltenen Konturdaten gesteuert. Diese Technik ist an sich beispielsweise im Rahmen von Rapid-Prototyping -Verfahren bekannt.

Beim Ausführungsbeispiel von Fig.2 sind Teile gleicher Bedeutung mit denselben Bezugszeichen wie in Fig. 1 bezeichnet. Ausgehend vom Grundkörper, der kleinere Abmessungen als der gewünschte Formkörper besitzt, werden nunmehr Ergänzungskörper 5-9, beispielsweise ebenfalls aus PU-Schaum oder anderen Rapid-Prototyping-Materialien, hinzugefügt. Diese werden vorbereitend in an sich bekannter Weise mittels eines Rapid-Prototyping-Verfahrens hergestellt und mit den Formteilen wiederum fest verbunden, beispielsweise ebenfalls durch Verkleben miteinander und mit den Standardbauteilen 1-4. Die Dicke der Ergänzungsteile 5-9 ist nicht notwendigerweise gleich der der Standardbauteile, sondern an die Lage auf dem Grundkörper angepaßt,

Auf diese Weise ist es möglich, schnell und kostengünstig beliebig geformte Formkörper herzustellen.

## Patentansprüche

1. Verfahren zur Herstellung eines dreidimensionalen Formteils, dessen Form als elektronischer Datensatz vorgegeben ist, dadurch gekennzeichnet, dass
- das Formteil elektronisch in einzelne standardisierte Teilelemente unterteilt wird, deren zusammengefügte Zuordnung der Form des dreidimensionalen Formteils angenähert ist,
- die Form der zusammengefügten Zuordnung elektronisch mit der Form des Formteils verglichen wird, und
- dass eventuelle Fehlbereiche oder Überstandbereiche in Form von Datensätzen ermittelt und gespeichert werden.

2. Verfahren nach Anspruch 1, dadurch gekennzeichnet, dass bei Fehlbereichen Ergänzungsteile mittels der gespeicherten Datensätze automatisch formgenau erzeugt werden.

3. Verfahren nach Anspruch 2, dadurch gekennzeichnet, dass die Uberstandbereiche mittels der gespeicherten Datensätze automatisch formgenau abgetragen werden.

4. Verfahren nach einem der Ansprüche 1 bis 3, dadurch gekennzeichnet, dass die standardisierten Teilelemente geometrische Grundformen wie Quader, Zylinder, kreisförmige Segmente, Parabelsegmente und/oder Hyperbelsegmente aufweisen.

5. Verfahren nach einem der Ansprüche 1 bis 4, dadurch gekennzeichnet, dass die Datensätze der Fehlbereiche in einem Rapid-Prototyping-Format abgespeichert oder in ein solches umgewandelt werden.

6. Verfahren nach einem der Ansprüche 1 bis 5, dadurch gekennzeichnet, dass die Datensätze der Überstände in einem Zerspannungsdatenformat abgespeichert oder in ein solches umgewandelt werden.

7. Verfahren nach einem der Ansprüche 1 bis 6, dadurch gekennzeichnet, dass die elektronisch ermittelten standardisierten Teilelemente automatisch aus einem Lager zugeführt und zusammengefügt werden, dass die zur Ergänzung der Fehlbereiche dienenden Teile automatisch hergestellt und eingefügt werden und/oder die Überstände automatisch abgetragen werden.
